# EUROPÄISCHE PATENTSCHRIFT

(11) **EP 1 038 429 B1**
(45) Veröffentlichungstag und Bekanntmachung des Hinweises auf die Patenterteilung: **30.07.2003**
(21) Anmeldenummer: 00104764.6
(22) Anmeldetag: 04.03.2000
(51) Int. Cl.: A01D 41/127, A01D 41/12, A01F 12/52

(54) **Einrichtung zur Messung des Kornanteiles in der Überkehr eines Mähdreschers**
Device for measuring the amount of grains in the tailings return system of a combine harvester
Dispositif pour mesurer la quantité des grains dans le dispositif de renvoi de résidus d'une moissonneuse-batteuse

(30) Priorität: 19.03.1999 DE 19912372
(43) Veröffentlichungstag der Anmeldung: 27.09.2000
(73) Patentinhaber: Case Harvesting Systems GmbH, 01844 Neustadt (DE)
(72) Erfinder: Bauch, Heiko, 02625 Bautzen (DE); Scholtke, Henri, 02692 Obergurig (DE); Seiler, Hans-Jörg, 02692 Obergurig (DE)
(74) Vertreter: Müller, Lutz

(56) Entgegenhaltungen:
- EP-A- 0 339 142
- DE-A- 4 138 533
- DE-A- 19 618 042
- GB-A- 1 552 794
- US-A- 4 902 264

## Beschreibung

Die Erfindung betrifft eine Einrichtung zur Messung zumindest eines Teiles des Kornanteiles in der Überkehr eines Mähdreschers gemäß den Merkmalen aus dem Oberbegriff des 1. Patentanspruches.

Der die Reinigungseinrichtung eines Mähdreschers verlassende und als Überkehr bezeichnete Massestrom besteht einmal aus Teilen des Erntegutes, die schwerer sind als die Spreu und auch schwerer als die Körner selbst, so daß sie nicht vom Reinigungsgebläse aus dem Siebkasten geblasen werden können. Das sind unausgedroschene Ähren oder ungenügend entgrannte Körner, die deshalb auf irgendeine Art nachgedroschen werden müssen. Zum anderen befinden sich aber auch einzelne Körner in der Überkehr. Wenn deren Anteil in der Überkehr zu hoch ist, sind die Funktionsorgane fehlerhaft eingestellt und die Leistungsfähigkeit des Mähdreschers ist reduziert. Deshalb gibt es, ausgehend von den heute üblichen Nachdreschmöglichkeiten, zur Überwachung der Überkehr folgende wesentliche Varianten.

Eine noch sehr weit verbreitete und einfache Lösung wird in den Mähdreschern der deutschen Firma CLAAS verwendet, beispielsweise in deren Mähdrescher des Typs "LEXION 480", der im Firmenprospekt mit dem Druckvermerk "8/95 (Gi) dtsch. 140/190.406.7" enthalten ist. Dort wird die Überkehr von der quer zur Fahrtrichtung des Mähdreschers ausgerichteten Ährenschnecke auf dessen rechte Seite gebracht und von da aus mittels eines sich daran anschließenden Ährenelevators bis in den Bereich der Dreschtrommel gefördert. Eine sich an das Ende des Ährenelevators anschließende obere Ährenschnecke befördert die Überkehr zum Nachdrusch in die Dreschtrommel. Im Gehäuse der oberen Ährenschnecke befindet sich eine Öffnung, wo der Fahrer des Mähdreschers die Überkehr sieht, um aus deren Menge und Zusammensetzung die richtige oder fehlerhafte Einstellung der Funktionsorgane erkennen zu können.

Nachteilig an dieser Lösung ist, daß das eine zusätzliche Belastung für den Fahrer des Mähdreschers ist. Des weiteren ist dadurch das Lenkverhalten des Fahrers beeinträchtigt, weil die Einsicht in genannte Öffnung des Gehäuses der oberen Ährenschnecke einen Blick zur Seite erfordert. Außerdem verlangt diese Methode vom Fahrer ein Höchstmaß an Erfahrung, um tatsächlich die richtigen Schlüsse zu ziehen. Andererseits hat aber diese Variante auch objektive Grenzen selbst bei einem erfahrenen Fahrer, da mit bloßem Auge nur mit großer Ungenauigkeit der Anteil der Körner in der Überkehr erkannt werden kann, auf die es ja vordergründig ankommt.

Eine gegenüber der vorstehend beschriebenen Lösungsmöglichkeit wesentlich verbesserte Ausführungsvariante ist in der EP 0 463 240 B1 offenbart. Der Grundaufbau der Behandlung der Überkehr ist hier analog wie bei den CLAAS-Mähdreschern gestaltet. Anstelle der Öffnung im Gehäuse der oberen Ährenschnecke befindet sich am Ende der die Überkehr sammelnden Ährenschnecke eine Meßeinrichtung zum Erfassen der Menge der Überkehr. Dazu ist eine-Flügelradeinrichtung auf der Welle der Ährenschnecke befestigt, deren Flügel gelenkig an einem exzentrischen Punkt der Welle befestigt sind. Ihre Schwerpunkte liegen in einem gewissen Abstand außerhalb der exzentrischen Punkte, so daß während der Drehung der Flügelradeinrichtung ihre Flügel durch die auf sie einwirkenden Zentrifugalkräfte in Richtung ihrer Ruhestellung gedrückt werden. Entsprechend der zu fördernden Menge der Überkehr werden die Flügel aus ihrer Ruhestellung unterschiedlich ausgelenkt, was von einem fest am Gestell des Mähdreschers angebrachten Sensors erfaßt und in Meßwerte umgewandelt wird.

Die Nachteile einer derartigen Meßeinrichtung bestehen darin, daß die Meßwerte durch unterschiedliche Konsistenz der Überkehr verfälscht werden und demzufolge zu sehr streuen. Außerdem sind die Meßwerte mehr eine Widerspiegelung des Füllungsgrades der Ährenschnecke und damit der Menge der Überkehr insgesamt, so daß damit keine genauen Angaben zum Anteil der Körner in der Überkehr gemacht werden können.

Mit der DE 41 38 533 A1 ist eine weitere Einrichtung zur Messung der Menge der Überkehr bekannt geworden, die in den Auswurfkanal eines Wurfelevators eingebaut ist. Der Wurfelevator nimmt die von der Ährenschnecke herangeförderte Überkehr auf, drischt sie gegebenenfalls nach und wirft sie dann entweder direkt auf den Vorbereitungsboden oder er schleudert sie in eine Überkehrschnecke, von der sie auf den Vorbereitungsboden transportiert wird. Die Meßeinrichtung selbst arbeitet mit einem physikalischen Feld, das durch variierende Mengen der Überkehr beeinflußt wird. Das physikalische Feld kann beispielsweise ein elektrisches Feld sein, das einen aus zwei Kondensatorflächen bestehenden Kondensator bildet. Denkbar ist aber auch der Einsatz eines physikalischen Feldes, das aus einer Lichtstrahlen aussendenden Lichtquelle und-einem Lichtempfänger besteht.

Da die Nachteile dieser Meßeinrichtung mit denen der Meßeinrichtung nach der EP 0 463 240 B1 identisch übereinstimmen, soll an dieser Stelle nur auf vorstehende Ausführungen verwiesen werden.

Schließlich ist noch mit der DE 196 18 042 A1 eine weitere Einrichtung zur Messung der Menge der Überkehr bekannt geworden, die im Grundaufbau mit der Lösung nach der DE 41 38 533 A1 übereinstimmt. Sie verwendet lediglich anstelle des physikalischen Feldes einen Prallsensor, der nur eine gleichwertige Alternative zum physikalischen Feld ist.

Deshalb liegt der Erfindung die Aufgabe zugrunde, eine Einrichtung zur Messung zumindest eines Teiles des Kornanteiles in der Überkehr eines Mähdreschers zu schaffen, die trotz unterschiedlicher Konsistenz der Überkehr exakte und jederzeit reproduzierbare Meßwerte liefert.

Diese Aufgabe wird gemäß der Erfindung durch die Merkmale des 1. Patentanspruches gelöst, wobei in den Unteransprüchen Merkmale aufgeführt sind, die diese Lösung in vorteilhafter Weise weiterentwickeln.

Durch die Anordnung eines die Körner zählenden Sensors irgendwo auf dem Förderweg zwischen der Reinigungseinrichtung und einer die Überkehr weiter behandelnden Verarbeitungseinrichtung wird unabhängig von der Aufprallenergie der Körner immer der gleiche Zählwert registriert.

Das ist aber erfindungsgemäß nur dann möglich, wenn sich in der Förderrichtung der Überkehr gesehen vor dem die Körner zählenden Sensor und vor der weiteren Verarbeitungseinrichtung eine deren Breite aufweisende Fördereinrichtung befindet, die aus einer oberen Ährenschnecke und einem Gehäuse besteht. Der auf den Sensor zeigende Bereich des Gehäuses ist dazu mit auf die Größe der Körner anpaßbaren Öffnungen ausgestattet, die ausschließlich den Durchtritt der Körner zulassen und die übrigen Anteile der Überkehr zurückhalten.

Da Mähdrescher zur Einbringung von Erntegütern mit sehr unterschiedlicher Korngröße eingesetzt werden, bietet es sich zur Anpassung der Größe der Öffnungen einmal an, den Bereich des Gehäuses mit Öffnungen als separates und schnell auswechselbares Sieb mit unterschiedlicher Größe der Öffnungen auszubilden. In sinnvoller Weise ist es aber ebenso möglich, zwei elektrisch, pneumatisch oder hydraulisch gegeneinander verschiebbare Siebe vorzusehen, die beim Verschieben die Größe der Öffnungen verändern.

Für die Ausbildung der Fördereinrichtung hat es sich als zweckmäßig erwiesen, daß sich die Öffnungen in ihrem Gehäuse zum Durchtritt der Körner nur über den in Förderrichtung der Überkehr gesehenen vorderen Teil bis etwa zur Mitte der weiteren Verarbeitungseinrichtung erstrecken und der sich daran anschließende Teil vollkommen offen ist, damit bei großen Mengen der Überkehr Verstopfungen vermieden werden. Dazu gehört logischerweise auch, daß der die Körner zählende Sensor nur so lang wie der Bereich der Öffnungen im Gehäuse ausgebildet ist.

Vorsorglich wird darauf hingewiesen, daß die Erfindung einerseits für den Fall benutzt ist, wenn alle Körner gezählt werden. Andererseits ist es aber ebenso im Rahmen der Erfindung möglich, nur die Körner eines vorbestimmten Anteiles der Überkehr zu zählen und danach durch Hochrechnung auf die gesamte Anzahl der Körner in der Überkehr zu schließen.

Als eine bevorzugte Lösung für die weitere Verarbeitungseinrichtung bietet sich einmal die Dreschtrommel zum wiederholten Drusch an. Dazu muß die Überkehr lediglich mit der Fördereinrichtung über die Dreschtrommel gebracht werden, von der aus die Körner oder ein Teil davon auf den Sensor fallen und ebenso wie der Rest der Überkehr in die Dreschtrommel gelangen.

Schließlich soll noch auf weitere bevorzugte Ausführungsmöglichkeiten der weiteren Verarbeitungseinrichtungen für die Überkehr hingewiesen werden, die einerseits eine Vorbereitungseinrichtung bzw. ein sogenannter Vorbereitungsboden und auch andererseits die Reinigungseinrichtung sein können. In diesen beiden Fällen sollte zweckmäßigerweise die Überkehr vorher nachgedroschen werden.

Zweckmäßige Ausführungen zur Weiterleitung der Überkehr über den die Körner zählenden Sensor zu den möglichen Verarbeitungseinrichtung werden darin gesehen, daß das einfach unter Einwirkung der Schwerkraft, von Saugkräften oder Zentrifugalkräften geschieht.

Zur Auswertung der Zählimpulse ist es zweckmäßig, dem Fahrer des Mähdreschers die Körneranzahl auf einer Anzeigeeinrichtung sichtbar zu machen. In einer Weiterbildung der Erfindung ist es aber ebenso möglich, die Zählimpulse einer Auswerte- und Steuereinrichtung zuzuführen, die auf die Einstellwerte der Funktionsorgane des Mähdreschers selbsttätig Einfluß nimmt. Zusammenfassend stellen sich die Vorteile dieser erfindungsgemäßen Einrichtung zum Zählen des Kornanteiles in der Überkehr so dar, daß damit sehr exakte Meßwerte aufgenommen werden, die auch bei unterschiedlicher Beschaffenheit der Überkehr infolge äußerer Einflüsse jederzeit reproduzierbar sind.

Die Erfindung soll nun anhand eines Ausführungsbeispiels näher erläutert werden, wobei die einzelnen Figuren zeigen:
- Fig. 1:: eine teilweise schematische Ansicht auf die rechte Seite eines Mähdreschers
- Fig. 2:: einen vergrößerten Ausschnitt um den Bereich der Dreschtrommel herum aus Fig. 1
- Fig. 3:: eine teilweise schematische Ansicht A nach Fig. 2

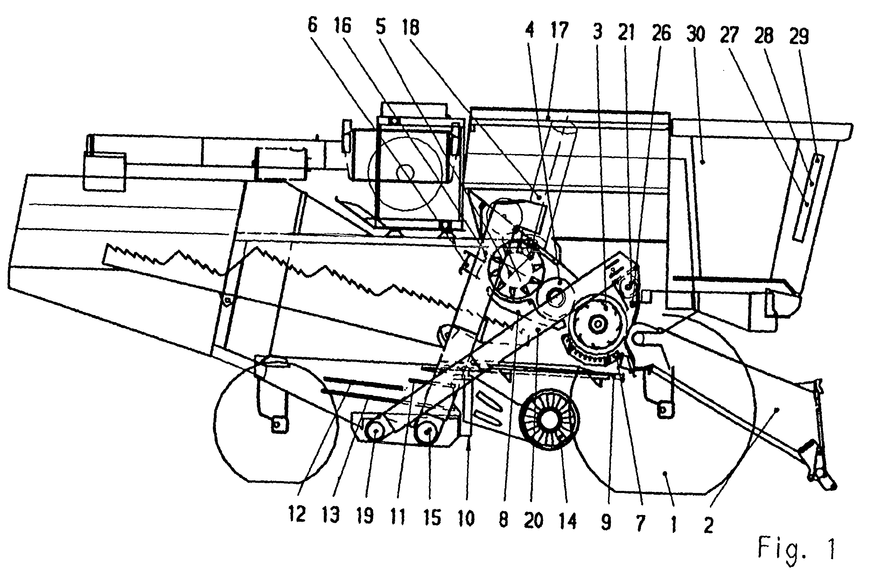

Der in Figur 1 gezeigte Mähdrescher besitzt zwischen den Vorderrädern 1 einen Schacht 2, an dem vorn ein nicht dargestellter Adapter aufgehangen wird. Vom hinteren Ende des Schachtes 2 aus wird das Dreschgut an ein 4-Trommel-Dreschwerk übergeben, das hier in Flußrichtung des Dreschgutes gesehen aus einer Dreschtrommel 3, einer Leittrommel 4, einer Separiertrommel 5 und einer Strohleittrommel 6 besteht. Zur Abscheidung der Körner aus dem Dreschgut ist der untere Bereich der Dreschtrommel 3 von einem Dreschkorb 7 umgeben und unterhalb der Leittrommel 4 und der Separiertrommel 5 befindet sich ein beide Trommeln teilweise umgebender Separierkorb 8. Unter dem 4-Trommel-Dreschwerk erstreckt sich annähernd in horizontaler Ausrichtung eine Vorbereitungseinrichtung 9, deren hinteres Ende etwas die darunter angeordnete Reinigungseinrichtung 10 überragt. Die Reinigungseinrichtung 10 besteht aus einem ersten Obersieb 11, einem zweiten Obersieb 12, einem einstückigen Untersieb 13 und einem Reinigungsgebläse 14. Unter dem Untersieb 13 befindet sich die Körnerschnecke 15, die wenigstens so breit wie das Untersieb 13 ist und deren Achse quer zur Fahrtrichtung des Mähdreschers zeigt. An ihrem rechten Ende ist ein aufwärts gerichteter Körnerelevator 16 angeschlossen, der mit einer in den Korntank 17 hineinragenden Steigschnecke 18 verbunden ist.

In der Fahrtrichtung des Mähdreschers gesehen hinter der Körnerschnecke 15 befindet sich die Ährenschnecke 19 zur Sammlung und Weiterleitung der Überkehr an den ebenfalls rechtsseitig an ihr angeschlossenen Ährenelevator 20. Dieser endet in einem Bereich seitlich oberhalb und vor der Dreschtrommel 3, an dem eine parallel zur Rotationsachse der Dreschtrommel 3 ausgerichtete obere Ährenschnecke 21 befestigt ist. Die obere Ährenschnecke 21 überragt die Dreschtrommel 3 fast über deren gesamte Breite, wobei sie wenigstens noch an einer Stelle mit dem Gestell 22 der Dreschtrommel 3 lösbar verbunden ist. Sie ist vollständig von einem Gehäuse 23 umgeben.

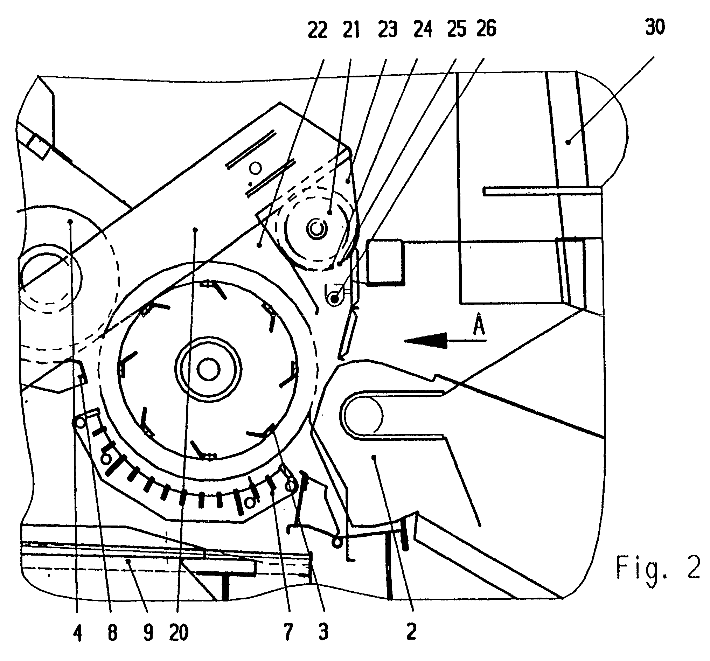

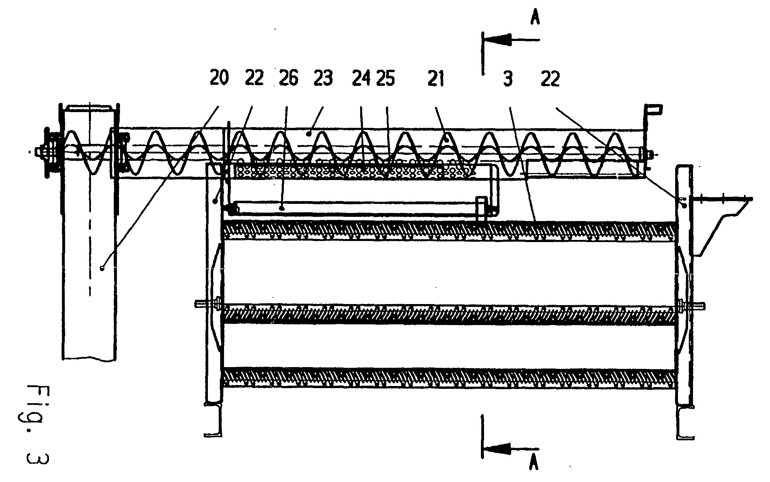

In den Figuren 2 und 3 ist durch die vergrößerte Darstellung gut zu sehen, daß das Gehäuse 23 unten im auf die Dreschtrommel 3 zeigenden Bereich mit Öffnungen 24 versehen ist, die innerhalb des Gestells 22 auf der rechten Seite beginnen und etwa in der Mitte der Dreschtrommel 3 enden. Zur Variation der Größe der Öffnungen ist dieser Teil des Gehäuses 23 als separates und auswechselbares Sieb 25 ausgebildet. Der übrige untere und bis zur linken Seite des Gestells 22 reichende Teil des Gehäuses 23 ist dagegen völlig offen.

Unterhalb der Öffnungen 24 und damit im Fallbereich der Überkehr ist ein die Körner zählender Sensor 26 aufgehangen.

Dieser Sensor 26 ist mit einer Anzeigeeinrichtung 27, einer Auswerteeinrichtung 28 und einer Steuereinrichtung 29 verbunden, die in einem gemeinsamen Gehäuse in der Fahrerkabine 30 des Mähdreschers untergebracht sind.

## Patentansprüche

1. Einrichtung zur Messung zumindest eines Teiles des Kornanteiles in der Überkehr eines Mähdreschers, wobei sich auf dem Förderweg der von der Reinigungseinrichtung abgeschiedenen Überkehr zu einer weiteren Verarbeitungseinrichtung ein ausschließlich die Körner zählender Sensor befindet, **dadurch gekennzeichnet, daß** sich in Förderrichtung der Überkehr gesehen vor dem die Körner zählenden Sensor (26) und vor der weiteren Verarbeitungseinrichtung eine deren Breite aufweisende Fördereinrichtung befindet, die aus einer oberen Ährenschnecke (21) und einem Gehäuse (23) besteht, wobei das Gehäuse (23) im auf den Sensor (26) zeigenden Bereich mit auf die Größe der Körner anpaßbaren Öffnungen (24) zu deren Durchtritt ausgestattet ist.

2. Einrichtung nach Anspruch 1, **dadurch gekennzeichnet, daß** der die Körner zählende Sensor (26) in einem aufgrund der Einwirkung der Schwerkraft auf die Überkehr entstandenen Fallbereich vor der weiteren Verarbeitungseinrichtung angeordnet ist.

3. Einrichtung nach Anspruch 1, **dadurch gekennzeichnet, daß** der die Körner zählende Sensor (26) in einem aufgrund der Einwirkung einer Saugkraft auf die Überkehr entstandenen Förderbereich vor der weiteren Verarbeitungseinrichtung angeordnet ist.

4. Einrichtung nach Anspruch 1, **dadurch gekennzeichnet, daß** der die Körner zählende Sensor (26) in einem aufgrund der Einwirkung einer Zentrifugalkraft auf die Überkehr entstandenen Förderbereich vor der weiteren Verarbeitungseinrichtung angeordnet ist.

5. Einrichtung nach den Ansprüchen 1 bis 4, **dadurch gekennzeichnet, daß** die weitere Verarbeitungseinrichtung eine Dreschtrommel (3) ist.

6. Einrichtung nach den Ansprüchen 1 bis 4, **dadurch gekennzeichnet, daß** die weitere Verarbeitungseinrichtung eine Vorbereitungseinrichtung (9) ist.

7. Einrichtung nach den Ansprüchen 1 bis 4, **dadurch gekennzeichnet, daß** die weitere Verarbeitungseinrichtung eine Reinigungseinrichtung (10) ist.

8. Einrichtung nach Anspruch 1, **dadurch gekennzeichnet, daß** der mit Öffnungen (24) versehene Bereich des Gehäuses (23) als separates und auswechselbares Sieb (25) mit unterschiedlich großen Öffnungen (24) ausgebildet ist.

9. Einrichtung nach Anspruch 1, **dadurch gekennzeichnet, daß** der mit Öffnungen (24) versehene Bereich des Gehäuses (23) aus elektrisch, pneumatisch oder hydraulisch gegeneinander verschiebbaren Sieben (25) zum Zwecke der Veränderung der Größe der Öffnungen (24) besteht.

10. Einrichtung nach einem oder mehreren der vorstehenden Ansprüche, **dadurch gekennzeichnet, daß** sich die aus der oberen Ährenschnecke (21) und dem Gehäuse (23) bestehende Fördereinrichtung über die gesamte Breite der weiteren Verarbeitungseinrichtung erstreckt, wobei sich der die Körner zählende Sensor (26) und die Öffnungen (24) im Gehäuse (23) nur über den in Förderrichtung der Überkehr gesehenen vorderen Teil erstrekken und der sich daran anschließende Teil des Gehäuses (23) offen ist.

11. Einrichtung nach einem oder mehreren der vorstehenden Ansprüche, **dadurch gekennzeichnet, daß** der die Körner zählende Sensor (26) an zumindest einer Anzeigeeinrichtung (27) und/oder einer eine Auswerteeinrichtung (28) aufweisenden Steuereinrichtung (29) angeschlossen ist.

## Claims

1. A device for the measurement of at least one part of the proportion of grain in the tailings of a combine harvester, where on the conveyor path of the tailings separated by the cleaning device to a further processing device, there is a sensor exclusively for counting the grains, **characterised in that**, viewed in the direction of conveyance of the tailings, in front of the grain counting sensor (26) and in front of the further processing device there is a conveyor device having the same width, which consist of an upper ear auger (21) and a casing (23), in which the casing (23) in the area pointing to the sensor (26) is equipped with openings (24) which are adjustable to the size of the grains so that they can pass through.

2. A device in accordance with claim 1, **characterised in that**, the grain counting sensor (26) is arranged in front of the further processing device in the dropping zone for the tailings arising on account of the forces of gravity.

3. A device in accordance with claim 1, **characterised in that**, the grain counting sensor (26) is arranged in front of the further processing device in the conveyor zone arising from the influence of forces of suction on the tailings.

4. A device in accordance with claim 1, **characterised in that**, the grain counting sensor (26) is arranged in front of the further processing device in the conveyor zone arising from the influence of a centrifugal force on the tailings.

5. A device in accordance with claims 1 to 4, **characterised in that**, the further processing device is a threshing drum (3).

6. A device in accordance with claims 1 to 4, **characterised in that** the further processing device is a preparation device (9).

7. A device in accordance with claims 1 to 4, **characterised in that** the further processing device is a cleaning device (10).

8. A device in accordance with claim 1, **characterised in that**, the area of the casing (23) provided with openings (24) is formed as a separate and exchangeable screen (25) with openings (24) of differing sizes.

9. A device in accordance with claim 1, **characterised in that**, the area of the casing (23) provided with openings (24) consist of screens (25) which can be moved towards each other electrically, pneumatically or hydraulically for the purpose of varying the size of the openings (24).

10. A device in accordance with one or more of the foregoing claims, **characterised in that**, the conveyor device consisting of the upper ear auger (21) and the casing (23) extends over the entire width of the further processing device, in which the grain counting sensor (26) and the openings (24) in the casing (23) extend only over the front part, viewed in the direction of conveyance of the tailings, and the part of the casing (23) adjoining it is open.

11. A device in accordance with one or more of the foregoing claims, **characterised in that** the grain counting sensor (26) is connected to a control unit (29) exhibiting at least a display device (27) and/or an evaluation device (28).

## Revendications

1. Dispositif pour la mesure d'au moins une partie de la proportion en grains dans les ôtons d'une moissonneuse-batteuse, comprenant un capteur de comptage des grains exclusivement sur l'itinéraire des ôtons séparés du dispositif de nettoyage en direction d'un autre dispositif de traitement, **caractérisé en ce que** dans la direction de transport des ôtons avant le capteur de comptage des grains (26) et avant l'autre dispositif de traitement, on trouve un dispositif de transport de même largeur qui est constitué d'un vis à épis supérieure (21) et d'une enveloppe (23), l'enveloppe (23) dans la zone orientée vers le capteur (26) étant équipée d'ouvertures (24) adaptables à la grosseur des grains en vue de leur passage.

2. Dispositif selon la revendication 1, **caractérisé en ce que** le capteur (26) de comptage des grains est disposé dans une zone de chute créée sur les ôtons en raison de l'action de la pesanteur, devant l'autre dispositif de traitement.

3. Dispositif selon la revendication 1, **caractérisé en ce que** le capteur (26) de comptage des grains est disposé dans une zone de transport créée sur les ôtons en raison de l'action d'une force d'aspiration, devant l'autre dispositif de traitement.

4. Dispositif selon la revendication 1, **caractérisé en ce que** le capteur (26) de comptage des grains est disposé dans une zone de transport créée sur les ôtons en raison de l'action d'une force centrifuge, devant l'autre dispositif de traitement.

5. Dispositif selon les revendications 1 à 4, **caractérisé en ce que** l'autre dispositif de traitement est un batteur (3).

6. Dispositif selon les revendications 1 à 4, **caractérisé en ce que** l'autre dispositif de traitement est un dispositif de préparation (9).

7. Dispositif selon les revendications 1 à 4, **caractérisé en ce que** l'autre dispositif de traitement est un dispositif de nettoyage (10).

8. Dispositif selon la revendication 1, **caractérisé en ce que** la zone de l'enveloppe (23) pourvue d'ouvertures (24) a la forme d'un crible séparé et interchangeable (25) avec des ouvertures de grandeur variable (24).

9. Dispositif selon la revendication 1, **caractérisé en ce que** la zone de l'enveloppe (23) pourvue d'ouvertures (24) est constituée de cribles (25) déplaçables l'un par rapport à l'autre électriquement, pneumatiquement ou hydrauliquement dans le but de modifier la grandeur des ouvertures (24).

10. Dispositif selon l'une ou plusieurs des revendications qui précèdent, **caractérisé en ce que** le dispositif de transport constitué de la vis à épis supérieure (21) et de l'enveloppe (23) s'étend sur la totalité de la largeur de l'autre dispositif de traitement, le capteur (26) de comptage des grains et les ouvertures (24) dans l'enveloppe (23) s'étendant uniquement au-dessus de la partie avant, vue dans le sens du transport des ôtons, la partie de l'enveloppe (23) s'y raccordant étant ouverte.

11. Dispositif selon une ou plusieurs des revendications qui précèdent, **caractérisé en ce que** le capteur (26) de comptage de grains est raccordé à au moins un dispositif d'affichage (27) et/ou un dispositif de commande (29) présentant un dispositif d'évaluation (28).
